# EUROPÄISCHE PATENTANMELDUNG

(11) **EP 1 063 862 A2**
(43) Veröffentlichungstag der Anmeldung: **27.12.2000**
(21) Anmeldenummer: 00112588.9
(22) Anmeldetag: 14.06.2000
(51) Int. Cl.: H04Q 7/38, H04Q 7/32

(54) **Verfahren und Einrichtung zum Aufbau einer Kommunikation zwischen einem Anwendergerät und einem Netz**

(30) Priorität: 25.06.1999 DE 19929251
(71) Anmelder: Fujitsu Siemens Computers GmbH, 81739 München (DE)
(72) Erfinder: Wiehler, Gerhard, 82223 Eichenau (DE)
(74) Vertreter: Epping, Wilhelm, Dipl.-Ing.

(57) **Zusammenfassung**

Es wird ein Verfahren und eine Einrichtung zum Aufbauen einer Kommunikation zwischen einem Anwendergerät und einem Netz angegeben, wobei persönliche Daten und Informationen sowie Programme über den Kommunikationsaufbau zwischen dem Anwendergerät und dem Netz in einem persönlichen Kommunikationsmodul gespeichert und die Daten und die Informationen zum Aufbau der Kommunikation abgerufen werden.

## Beschreibung

Die Erfindung betrifft ein Verfahren und eine Einrichtung zum Aufbau einer Kommunikation zwischen einem Anwendergerät und einem Netz.

Die mobile Kommunikation mit Mobilfunktelefonen hat in den vergangenen Jahren einen großen Aufschwung erlebt. Auch für andere Geräte beispielsweise Notebooks, in der Hand haltbare PC's, und vor allem für eine Generation neuer Geräte, beispielsweise Organizer, Autonavigatoren, digitale Kameras, Walkman und dergleichen, wird eine flexible Anschlußmöglichkeit an ein Mobilnetz oder Festnetz immer wichtiger. Dabei wird in den nächsten Jahren die Anzahl der verschiedenen Geräte, die ein einzelner Benutzer für den Zugang zum Netz verwendet, ständig steigen. Auch möchten Benutzer, deren Aufenthaltsort häufig wechselt, mit fremden Anwendergeräten, beispielsweise fremden PC's, auf eigene Netzresourcen zugreifen können. Heutige Identifizierungs- und Authentisierungsverfahren sind hier umständlich und bieten keine ausreichende Sicherheit.

Nach dem heutigen Stand der Technik hat jedes Anwendergerät einen eigenen Kommunikationsmodul, beispielsweise GSM, um die Kommunikation zwischen dem Anwendergerät und einem Netz herzustellen. Die persönliche Identifikation beziehungsweise Authentifikation des Anwenders im Netz wird in der Regel gerätespezifisch nach dem jeweiligen Verfahren des Netzbetreibers, Dienstanbieters oder der Anwendung durchgeführt. Ein Benutzer, der beispielsweise ein Mobilfunktelefon, ein Note-book, einen PC, einen Organizer, eine digitale Kamera oder einen Autonavigator mit dem jeweiligen Netzanschluß verwenden möchte, würde demnach Geräte mit fest eingebauten, gerätespezifischen Kommunikationsmodulen benutzen müssen. Dabei müssen dann gänzlich unterschiedliche Identifikations- beziehungsweise Authentifikationsverfahren mit den zugehörigen Paßwörtern, PIN oder anderen Eingaben beherrscht werden, was sehr unpraktisch ist, weil die einzelnen Identifikations- oder Authentifikationsverfahren unterschiedlich sind und damit das Gedächtnis des Anwenders strapazieren. Trotz der Kompliziertheit der verschiedenen Verfahren sind dennoch die verwendeten Identifikations- und Authentisierungsverfahren für offene Netzarchitekturen nicht sicher genug.

Demgegenüber liegt der Erfindung die Aufgabe zugrunde, ein Verfahren und eine Einrichtung zum Aufbau einer Kommunikation zwischen einem Anwendergerät und einem Netz bereitzustellen, welches einfach bedienbar und auf die persönlichen Bedürfnisse und Daten des Anwenders abgestimmt ist.

Dazu ist das erfindungsgemäße Verfahren dadurch gekennzeichnet, daß die persönlichen Daten sowie die Information über den Kommunikationsaufbau zwischen unterschiedlichen Anwendergeräten und Netzen in einem in unterschiedliche Geräten steckbaren, persönlichen Kommunikationsmodul gespeichert werden, und daß die Daten und Informationen zum Aufbau der Kommunikation abgerufen werden.

Bei dem erfindungsgemäßen Verfahren zur Identifikation oder Authentisierung in Netzen sind die persönlichen Identifikations- und Authentisierungs-Daten beziehungsweise Merkmale in dem Kommunikationsmodul in einer Moduleinheit fest miteinander verbunden. Den persönlichen Kommunikationsmodul kann der Anwender wie einen Personalausweis ständig mit sich tragen. Über eine standardisierte Schnittstelle kann der Kommunikationsmodul mit einem einfachen Handgriff gesteckt und in verschiedenen eigenen Anwendergeräten, beispielsweise Mobiltelefon, Organizer, Notebook, PC, Walkman, Kamera, Set-Top-Box und dergleichen jeweils dann eingesetzt werden, wenn ein Netzzugang gewünscht wird. Auch in fremden Geräten, die eine Standardschnittstelle zur Verfügung stellen und den Kommunikationsmodul mit entsprechender Treiber-Software bedienen können, kann der persönliche Kommunikationsmodul Verwendung finden.

Ein weiterer Vorteil besteht darin, daß die Identifikations-, Authentisierungs- und Autorisierungsprozeduren erheblich vereinfacht werden können, da beispielsweise Paßwörter, private Schlüssel, Zertifikate des öffentlichen Schlüssels, Telefonnummern und dergleichen in dem Kommunikationsmodul gespeichert sind und vom Anwender nicht mehr bei jeder Gelegenheit neu eingegeben werden müssen.

Eine vorteilhafte Ausführungsform der Erfindung ist dadurch gekennzeichnet, daß der persönliche Kommunikationsmodul mit den Identifikations- und Authentisierungsdaten sowie persönlichen Daten seines Besitzers beziehungsweise Anwenders mechanisch gekapselt werden. Ein Vorteil dieser Ausführungsform besteht darin, daß die Daten von außen durch Unberechtigte nicht manipuliert werden können. Da beispielsweise Paßwörter und private Schlüssel in dem verkapselten Kommunikationsmodul wesentlich sicherer gespeichert sind als nach dem Stand der Technik, ist auch eine ausreichende Sicherheit für sensitive Anwendungen im offenen Netz gegeben.

Eine vorteilhafte Ausführungsform der Erfindung ist dadurch gekennzeichnet, daß auch die Programme zum Kommunikationsaufbau in dem Kommunikationsmodul gespeichert werden. Damit wird der Kommunikationsmodul in vorteilhafter Weise zu einem eigenständigen Gerät, mit dem die Kommunikation hergestellt werden kann.

Eine weitere vorteilhafte Ausführungsform der Erfindung ist dadurch gekennzeichnet, daß die persönlichen Daten solche zum Identifizieren oder Authentisieren sowie personenbezogene Daten umfassen. Damit wird in vorteilhafter Weise der Anwendungsbereich des Kommunikationsmoduls vergrößert, indem nicht nur die Zugangsdaten zum Aufbau der Verbindung sowie die Daten zur Identifizierung und Authentisierung, sondern auch weitere persönliche Daten zur Verfügung gestellt werden, wenn es darum geht, die aufgebaute Verbindung für bestimmte Zwekke, beispielsweise Online-Banking oder dergleichen, zu verwenden.

Eine weitere vorteilhafte Ausführungsform der Erfindung ist dadurch gekennzeichnet, daß die Identifizierungs- beziehungsweise Authentisierungsdaten unter einem Hauptschlüssel und entsprechend einer Schlüsselhierarchie darunter angeordneten, spezifischen Schlüsseln abgelegt werden. Damit ergibt sich in vorteilhafter Weise eine Möglichkeit, einzelnen Bereiche des Kommunikationsmoduls für den Zugang individuell abzusichern und damit eine erhöhte Sicherheit bei der Verwendung des Kommunikationsmoduls zu erreichen.

Eine weitere vorteilhafte Ausführungsform der Erfindung ist dadurch gekennzeichnet, daß der Hauptschlüssel bereits beim Herstellen des Kommunikationsmoduls eingespeichert wird, wodurch sichergestellt wird, daß der Kommunikationsmodul nicht bereits bei der ersten Inbetriebnahme manipuliert wird.

Eine weitere vorteilhafte Ausführungsform der Erfindung ist dadurch gekennzeichnet, daß die spezifischen Schlüssel nach einem cryptographischen Verfahren abgelegt werden, um die Sicherheit der Schlüssel zu erhöhen.

Eine weitere vorteilhafte Ausführungsform der Erfindung ist dadurch gekennzeichnet, daß relevante Daten und Programme, insbesondere die Daten für den Kommunikationsaufbau und die persönlichen Daten sowie die Programme und Steuerungsparameter, in dem Kommunikationsmodul in einem geschützten Speicherbereich nicht-manipulierbar gespeichert werden, so daß in vorteilhafter Weise ein Mißbrauch des Kommunikationsmoduls erheblich erschwert wird.

Eine weitere vorteilhafte Ausführungsform der Erfindung ist dadurch gekennzeichnet, daß in dem Kommunikationsmodul Programme gespeichert werden, die bei Aktivierung durch den Anwender oder einen Kommunikationspartner im Netz entsprechend an sich bekannter Protokolle und an sich bekannter Identifizierungs- oder Authentisierungs-Prozeduren sowie durch die persönlichen Daten und zum Verbindungsaufbau erforderlichen Parameter gesteuert durch das Anwendergerät über eine Geräteschnittstelle von dem Kommunikationsmodul in den Nachrichtenstrom eingeblendet werden. Somit kann der Kommunikationsmodul sowohl von sich aus eine Verbindung mit dem gewünschten Netz herstellen, während er auch selbst über das Netz aktiviert werden kann, so daß eine Verbindung von einem Netzteilnehmer über den Kommunikationsmodul zu dem Anwendergerät hergestellt wird.

Eine weitere vorteilhafte Ausführungsform der Erfindung ist dadurch gekennzeichnet, daß zur Identifizierung oder Authentisierung des Anwenders gegenüber dem Kommunikationsmodul eine PIN und/oder ein Paßwort in dem Kommunikationsmodul gespeichert werden und daß die PIN oder das Paßwort vom Anwender über das Anwendergerät eingegeben wird. Dadurch kann einerseits sichergestellt werden, da0 nur ein berechtigter Anwender den Kommunikationsmodul durch Eingabe einer PIN funktionsbereit machen kann, andererseits kann der Anwender jederzeit eine Änderung der PIN vornehmen, um beispielsweise beim Ausspähen der PIN durch einen Unberechtigten Mißbrauch vorbeugen. Des Weiteren können in vorteilhafter Weise der Aufwand für den Kommunikationsmodul gesenkt und damit die Kosten reduziert werden, da das Anwendergerät als Eingabegerät für den Kommunikationsmodul benutzt wird.

Eine weitere vorteilhafte Ausführungsform der Erfindung ist dadurch gekennzeichnet, daß zur Identifizierung oder Authentisierung des Anwenders ein biometrisches Referenzmuster, vorzugsweise ein Sprachmuster oder ein Fingerabdruck, in dem Kommunikationsmodul gespeichert wird, und daß das biometrische Muster von dem Anwender über einen Sensor in den Kommunikationsmodul verifiziert wird. Durch den zusätzlichen Sensor, der das biometrische Muster des Anwenders erfassen kann, wird eine Möglichkeit geschaffen, eine berechtigte Nutzung des Kommunikationsmoduls und den Zugriff auf den Kommunikationsmodul außerordentlich sicher zu gestalten.

Eine weitere vorteilhafte Ausführungsform der Erfindung ist dadurch gekennzeichnet, daß die Daten oder Informationen durch einen Crypto-Controller in dem Kommunikationsmodul verschlüsselt beziehungsweise entschlüsselt werden, so daß eine erhöhte Sicherheit dadurch gegeben ist, daß in dem gekapselten Kommunikationsmodul cryptographische Verfahren unter Verwendung der im Kommunikatonsmodul gespeicherten Schlüssel angewendet werden.

Eine weitere vorteilhafte Ausführungsform der Erfindung ist dadurch gekennzeichnet, daß eine Information an einem Anzeigefeld an dem Kommunikationsmodul angezeigt wird. Damit ergibt sich in vorteilhafter Weise eine Möglichkeit, die Information zu überprüfen und gegebenenfalls neu einzugeben, falls sie geändert werden sollen oder eine Manipulation der Information festgestellt wurde, bevor eine Transaktion ausgelöst wird.

Eine weitere vorteilhafte Ausführungsform der Erfindung ist dadurch gekennzeichnet, daß der Netzanschluß im Kommunikationsmodul durch eine zusätzliche netzseitige Schnittstelle von der Steuerung des Kommunikationsmoduls entkoppelt ist. Damit kann der Kommunikationsmodul in vorteilhafter Weise mit Unterschiedlichen Netzanschlüssen ausgestattet werden und bei Ausstattung mit mehreren Anschlüssen könne die Verbindungen in vorteilhafter Weise, zum Beispiel mit einem Mobilnetz und einem Festnetz, durch einfaches Auswählen des zutreffenden Anschlusses bewerkstelligt werden.

Eine weitere vorteilhafte Ausführungsform der Erfindung ist dadurch gekennzeichnet, daß in dem Kommunikationsmodul bei der Einleitung eines aus dem Netz angestoßenen Verbindungsaufbaus feststellt, wenn das Gerät, in das der Kommunikationsmodul eingesteckt ist, für die angeforderte Kommunikation nicht geeignet ist. Damit kann in vorteilhafter Weise dem Kommunikationspartner in Netz und an Gerät eine Rückmeldung gegeben werden. Des Weiteren kann der Kommunikationsmodul diesen Vorgang speichern, um nach dem Einstecken des Kommunikationsmoduls in ein geeignetes Gerät eine Nachricht an das Gerät abzusetzen.

Die Einrichtung zum Aufbauen einer Kommunikation zwischen einem Anwendergerät und einem Netz ist erfindungsgemäß gekennzeichnet durch einen persönlichen Kommunikationsmodul, in dem persönliche Daten sowie Informationen über den Kommunikationsaufbau zwischen unterschiedlichen Anwendergeräten und Netzen bereitgestellt sind.

Mit dieser Einrichtung und deren vorteilhaften Ausgestaltungen, die in den restlichen Unteransprüchen gekennzeichnet sind, lassen sich die entsprechenden Vorteile erreichen, wie sie oben im Zusammenhang mit den Verfahrensansprüchen angegeben sind.

Ausführungsbeispiele der Erfindung werden nun anhand der beiliegenden Zeichnungen beschrieben. Es zeigen:
Figur 1 eine schematische Darstellung der Struktur des persönlichen Kommunikationsmoduls gemäß einem Ausführungsbeispiel der Erfindung;
Figur 2 eine Schlüsselhierarchie, wie sie in dem Kommunikationsmodul verwirklicht sein kann;
Figur 3 eine abgewandelte Ausführungsform des persönlichen Kommunikationsmoduls in schematischer Darstellung; und
Figur 4 eine perspektivische Darstellung des Kommunikationsmoduls als Gerät.

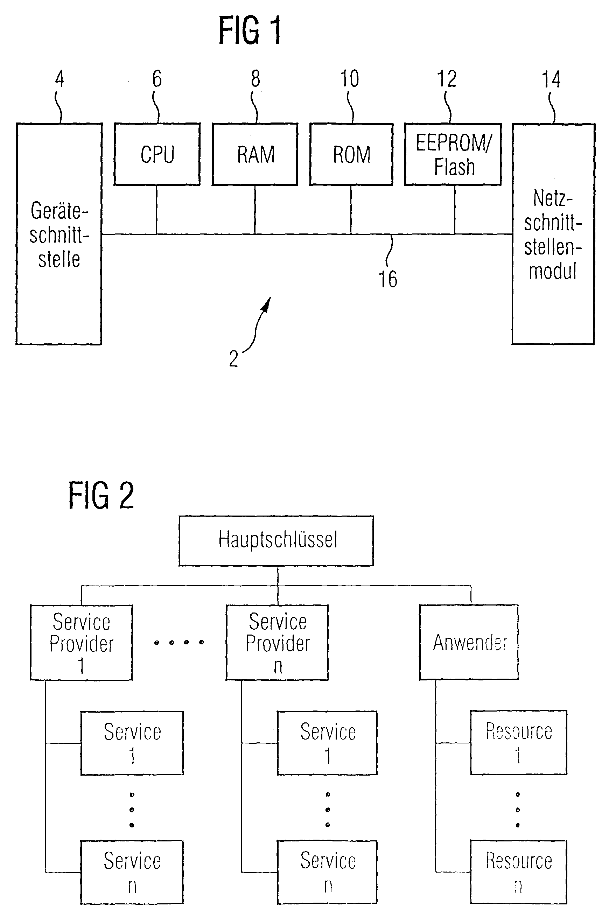

In Figur 1 ist ein persönlicher Kommunikationsmodul nach einem Ausführungsbeispiel der Erfindung schematisch dargestellt. Der Kommunikationsmodul 2 umfaßt eine Geräteschnittstelle 4 zum Anwendergerät, ein Rechner 6, einen Arbeitsspeicher 8, einen Speicher 10 für ein Betriebssystem, einen Speicher 12 für die Programme und die Daten, sowie einen Netzschnittstellenmodul 14. Die Elemente des Kommunikationsmoduls sind über einen Bus 16 miteinander verbunden. Mit der Gerateschnittstelle 4 wird der Kommunikationsmodul 2 an ein Anwendergerät gesteckt, während der Netzschnittstellenmodul 14 zum Anschluß an ein Netz vorgesehen ist.

Der Speicher 12 für die Programme und die Daten kann nach heutigem Stand der Technik ein EEPROM-Speicher oder ein sogenannter Flash-Speicher sein. Jedenfalls muß der Speicher geeignet sein, anwenderspezifische Daten auch im spannungslosen Zustand zu speichern und auch Änderungen dieser Daten zuzulassen.

Figur 2 zeigt eine Schlüsselhierarchie, wie sie in dem Kommunikationsmodul, insbesondere in dem EEPROM-Speicher 12 verwirklicht sein kann. Es ist ein Hauptschlüssel vorgesehen, der den Erstzugriff zu dem Kommunikationsmodul kontrolliert. Für den Zugriff auf Speicherbereiche des Kommunikationsmoduls und zur Sicherung von Kommunikationsvorgängen sind in der Schlüsselhierarchie mehrere Unterschlüssel vorgesehen, die beispielsweise verschiedenen Serviceprovidern 1...n, Service-Leistungen 1...n im Bereich der einzelnen Serviceprovider sowie Resourcen 1...n des Anwenders absichern.

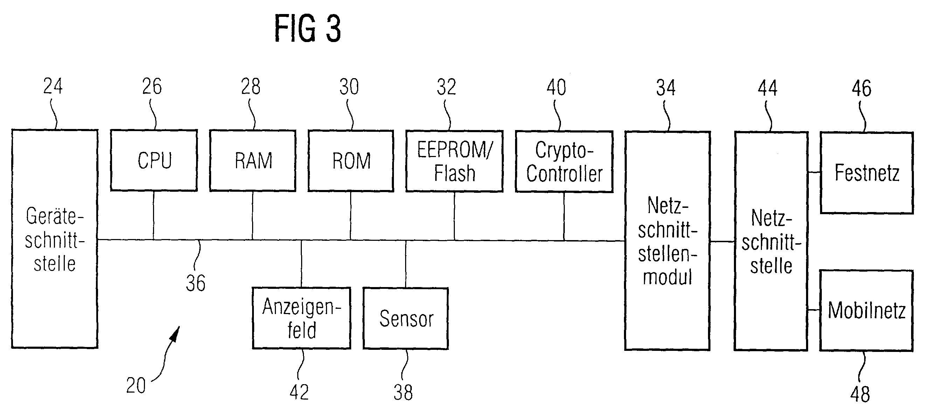

Figur 3 ist eine abgewandelte Ausführungsform des persönlichen Kommunikationsmoduls 20 in schematischer Darstellung. Wie der Kommunikationsmodul 2 weist auch der Kommunikationsmodul 20 eine Geräteschnittstelle 24, einen Rechner 26 (CPU), einen Arbeitsspeicher 28 (RAM), einen Betriebssystemspeicher 30 (ROM), einen Speicher 32 für die Programme und die Daten sowie einen Netzschnittstellenmodul 34 auf. Die Elemente des Kommunikationsmoduls 20 sind über einen Bus 36 miteinander verbunden. Zusätzlich weist der Kommunikationsmodul 20 einen Sensor 38 auf, der zur Identifizierung oder Authentisierung des Anwenders durch ein biologisches Muster, vorzugsweise ein Sprachmuster oder einen Fingerabdruck, dient. Das biometrische Muster ist in dem Speicher 32 gespeichert, und, wenn ein Zugriff auf den Kommunikationsmodul 20 erwünscht ist, wird das biometrische Muster des Anwenders über den Sensor 38 am Kommunikationsmodul 20 eingegeben. In dem Kommunikationsmodul 20 wird dann die Übereinstimmung der beiden biometrischen Muster überprüft, und bei positivem Ergebnis wird der Zugang zu dem Kommunikationsmodul 20 ermöglicht.

Der Kommunikationsmodul 20 gemäß Figur 3 umfaßt weiterhin einen Crypto-Controller 40, der dazu dient, die Daten oder Informationen in dem Kommunikationsmodul 20 zu verschlüsseln beziehungsweise zu entschlüsseln, um die Sicherheit des Kommunikationsmoduls zu verbessern.

Des Weiteren ist bei dem Ausführungsbeispiel von Figur 3 ein Anzeigenfeld 42 vorgesehen, an dem Informationen der Anwender überprüfen möchte oder bestätigen soll angezeigt werden können.

Schließlich weist die Ausführungsform von Figur 3 noch einen zusätzlichen Netzschnittstellenmodul 44 auf, der unterschiedliche Netzanschlüsse umfaßt, so daß auf einfache Weise eine Verbindung mit einem Festnetz 46 oder einem Mobilnetz 48 aufgebaut werden kann, in dem lediglich die geeigneten Abschlüsse an dem Netzschnittstellenmodul 44 ausgebildet werden.

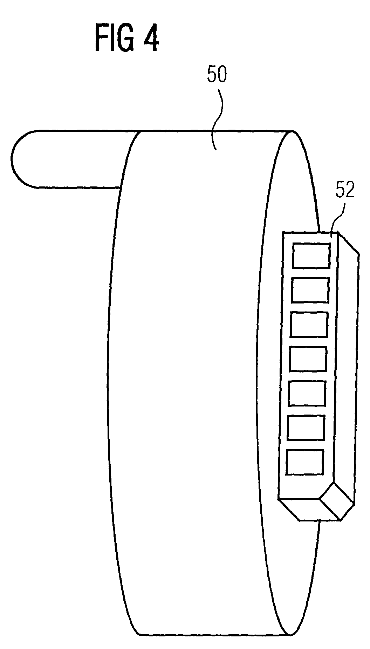

Figur 4 zeigt eine schematische, perspektivische Darstellung des Kommunikationsmoduls als Gerät. Es kann sich dabei um den Kommunikationsmodul 2 oder den Kommunikationsmodul 20 handeln. Der Kommunikationsmodul hat ein Gehäuse 50 und einen Steckanschluß 52, mit dem er in eine entsprechende Schnittstellenbuchse an dem Anwendergerät eingesteckt werden kann. Da eine weitgehende Normung von Schnittstellen heutzutage üblich ist, kann ein derartiger Kommunikationsmodul mit einer großen Vielzahl von Anwendergeräten verwendet werden.

Im folgenden wird der Ablauf bei dem Verbindungsaufbau beziehungsweise die Betriebsweise des Kommunikationsmoduls beschrieben. Die Personalisierung, das heißt das Laden des Kommunikationsmoduls mit Identifikations-, Authentisierungsparametern, persönlichen Daten und Programmen erfolgt nach einem an sich bekannten Verfahren, wie es bei Prozessorchipkarten üblich ist. Aus dem eindeutigen Hauptschlüssel können von Serviceprovidern oder Dienstanbietern oder vom Anwender selbst weitere spezifische Schlüssel entsprechend einer Schlüsselhierarchie generiert werden, und der Hauptschlüssel sowie die speziellen Unterschlüssel können in dem Kommunikationsmodul nicht manipulierbar abgespeichert werden. Mittels dieser Schlüssel können dann Parameter und Daten im geschützten Speicherbereich des Kommunikationsmoduls sowie Kommunikationsvorgänge und Netzrecoursen gesichert werden.

Wird eine Kommunikation durch den Anwender eingeleitet, erhält der im Anwendergerät gesteckte Kommunikationsmodul über die Geräteschrittstelle einen entsprechenden Code, der den Kommunikationsmodul veranlaßt, den Verbindungsaufbau zum persönlichen Kommunikationspartner zu starten. Während des Verbindungsaufbaus werden, entsprechend bekannter Protokolle und Anwendungsverfahren, die Identifikations- und Authentisierungsparameter, beispielsweise Paßwort, Benutzer-ID, private Schlüssel, Zertifikat des öffentlichen Schlüssels, gesteuert durch das Anwendergerät, über die Geräteschnittstelle vom Kommunikationsmodul in den Nachrichtenstrom eingeblendet. Nach positivem Verbindungsaufbau können, gesteuert durch das Anwendergerät, auch persönliche Daten oder beispielsweise Autorisierungsparameter von dem Kommunikationsmodul in den Nachrichtenstrom eingeblendet werden. Im Anwendergerät und im Kommunikationsmodul können Abläufe programmiert sein, um die zum Verbindungsaufbau erforderlichen Parameter, beispielsweise Telefonnummern, IP-Adressen, Mailadressen und dergleichen, aus einem Speicherbereich des Kommunikationsmoduls zu selektieren und entsprechend den Kommunikationsprotokollen einzublenden.

Wird eine Kommunikation durch einen Kommunikationspartner im Netz eingeleitet, erkennt der gesteckte Kommunikationsmodul das eingehende Signal und aktiviert das Anwendergerät, um einen Verbindungsaufbau herzustellen. Erforderliche Authentisierungsparameter während des Verbindungsaufbaus, beziehungsweise Autorisierungsparameter im Verfahren, werden von dem Kommunikationsmodul, gesteuert durch das Anwendergerät, eingeblendet wie oben beschrieben wurde.

Eine persönliche Identifikation des Anwenders durch den Kommunikationsmodul kann wie folgt durchgeführt werden. Nach Einstecken des Kommunikationsmoduls in ein Anwendergerät startet der Anwender am Gerät eine Identifikationsprozedur. Dabei gibt er an der Tastatur des Anwendergerätes eine PIN (persönliche Identifikationsnummer) ein. Das Anwendergerät übergibt über die Geräteschnittstelle die PIN mit einem Identifikationscode an den Kommunikationsmodul. Der Kommunikationsmodul vergleicht die PIN mit einer bei der Personalislerung des Kommunikationsmoduls eingespeicherten Referenzzahl. Bei einem positiven Ergebnis schaltet der Kommunikationsmodul seine Grundfunktionen frei. Statt mit einer PIN kann die Identifikation auch mit Paßwörtern oder biometrischen Mustern durchgeführt werden, wie oben beschrieben wurde. In dem Kommunikationsmodul können bei der Personalisierung entsprechende Paßwörter oder Referenzmuster gespeichert werden.

Der bereits erwähnte Sensor dient zur Erhöhung der Sicherheit bei der persönlichen Identifikation des Anwenders bei dem Kommunikationsmodul. Nach Einstecken des Kommunikationsmoduls in das Anwendergerät schaltet der Kommunikationsmodul seine Grundfunktionen erst nach positiver Verifikation des am Sensor erkannten biometrischen Musters frei. Der Crypto-Controller ist für asymmetrische Verschlüsselungsverfahren ausgelegt und erhöht in dem Kommunikationsmodul die Sicherheit bei den Authentisierungs- und Autorisierungsverfahren. Der Kommunikationsmodul führt die Verschlüsselung/Entschlüsselung eigenständig durch und erzeugt digitale Signaturen. Damit sind Manipulationsmöglichkeiten von außen praktisch nicht mehr gegeben. Gleichzeitig kann die Sicherheit beim Laden von sensiblen Schlüsseln oder Daten einerseits von der Anwendergeräteseite und andererseits über den Netzanschluß erheblich gesteigert werden.

Der Kommunikationsmodul kann beispielsweise auch an Automaten eingesteckt werden, um beispielsweise nach Auswahl einer Ware oder eines Tickets einen Zahlvorgang über ein Netz abzuwikkeln. In diesem Fall ist aus Sicherheitsgründen ein Anzeigenfeld im Kommunikationsmodul vorgesehen. In diesem Feld wird unter Steuerung des Automaten der Zahlbetrag für das ausgewählte Objekt angezeigt, so daß der Benutzer sich von der Richtigkeit seiner Angaben überzeugen kann, bevor er eine On-line-Transaktion auslöst.

Zum Bezahlen von kleineren Beträgen eignet sich besonders eine elektronische Geldbörse, wie sie beispielsweise bereits in der deutschen Geldkarte verwirklicht ist. Der Kommunikationsmodul mit seinen Sicherheitsmerkmalen kann nach den bekannten Konventionen eine oder mehrere elektronische Geldbörsen beinhalten. Das Auf- oder Abbuchen von Geldbeträgen kann von Anwendergeräten nach bekannten Verfahren abgewickelt werden. Der Kommunikationsmodul verhält sich dabei wie ein Chipkartenleser mit eingesteckter Chipkarte mit der Anwendung 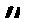 elektronische Geldbörse". Bei der Ausführungsform von Figur 3 mit dem zusätzlichen Netzschnittstellenmodul 44 werden die Netzanschlüsse für das Festnetz 46 und das Mobilnetz 48 von dem eigentlichen Kommunikationsmodul entkoppelt. Damit lassen sich mit demselben Kommunikationsmodul unterschiedliche Netzanschlüsse, beispielsweise GSM, DECT, UMTS, IR, ISDN, DVB-C, realisieren oder beispielsweise mehrere Mobilfunknetze verschiedener Frequenzen, beispielsweise GSM 800 und 1900 oder auch ein Mobilnetzanschluß und ein Festnetzanschluß, beispielsweise GSM und ISDN, parallel realisieren.

## Patentansprüche

1. Verfahren zum Aufbauen einer Kommunikation zwischen einem Anwendergerät und einem Netz, **dadurch gekennzeichnet**, **daß** persönliche Daten sowie Informationen über den Kommunikationsaufbau zwischen dem Anwendergerät und dem Netz in einem in unterschiedlichen Geräte steckbaren, persönlichen Kommunikationsmodul gespeichert werden und daß die Daten und die Informationen zum Aufbau der Kommunikation abgerufen werden.

2. Verfahren nach Anspruch 1, **dadurch gekennzeichnet**, **daß** der persönliche Kommunikationsmodul mit den Identifikations- und Authentisierungsdaten sowie persönlichen Daten seines Besitzers beziehungsweise Anwenders mechanisch gekapselt werden.

3. Verfahren nach Anspruch 1 oder 2, **dadurch gekennzeichnet**, **daß** auch die Programme zum Kommunikationsaufbau in dem Kommunikationsmodul gespeichert werden.

4. Verfahren nach einem der Ansprüche 1 bis 3, **dadurch gekennzeichnet**, **daß** die persönlichen Daten solche zum Identifizieren oder Authentisieren sowie personenbezogene Daten umfassen.

5. Verfahren nach Anspruch 4, **dadurch gekennzeichnet**, **daß** die Identifizierungs- beziehungsweise Authentisierungsdaten unter einem Hauptschlüssel und entsprechend einer Schlüsselhierarchie darunter angeordneten, spezifischen Schlüsseln abgelegt werden.

6. Verfahren nach Anspruch 5, **dadurch gekennzeichnet**, **daß** der Hauptschlüssel bereits beim Herstellen des Kommunikationsmoduls eingespeichert wird, wodurch sichergestellt wird, daß der Kommunikationsmodul nicht bereits bei der ersten Inbetriebnahme manipuliert wird.

7. Verfahren nach Anspruch 5, **dadurch gekennzeichnet**, **daß** die spezifischen Schlüssel nach einem cryptographischen Verfahren abgelegt werden, um die Sicherheit der Schlüssel zu erhöhen.

8. Verfahren nach einem der Ansprüche 1 bis 7, **dadurch gekennzeichnet**, **daß** daß relevante Daten und Programme, insbesondere die Daten für den Kommunikationsaufbau und die persönlichen Daten sowie die Programme und Steuerungsparameter, in dem Kommunikationsmodul in einem geschützten Speicherbereich nicht-manipulierbar gespeichert werden.

9. Verfahren nach Anspruch 3, **dadurch gekennzeichnet**, **daß** in dem Kommunikationsmodul Programme gespeichert werden, die bei Aktivierung durch den Anwender oder einen Kommunikationspartner im Netz, entsprechend an sich bekannter Protokolle und an sich bekannter Identifizierungs- oder Authentisierungs-Prozeduren sowie durch die persönlichen Daten und zum Verbindungsaufbau erforderlichen Parameter, gesteuert durch das Anwendergerät über eine Geräteschnittstelle, von dem Kommunikationsmodul in den Nachrichtenstrom eingeblendet werden.

10. Verfahren nach einem der vorhergehenden Ansprüche, **dadurch gekennzeichnet**, **daß** zur Identifizierung oder Authentisierung des Anwenders gegenüber dem Kommunikationsmodul eine PIN und/oder ein Paßwort in dem Kommunikationsmodul gespeichert werden und daß die PIN oder das Paßwort vom Anwender über das Anwendergerät eingegeben wird.

11. Verfahren nach einem der vorhergehenden Ansprüche, **dadurch gekennzeichnet**, **daß** zur Identifizierung oder Authentisierung des Anwenders ein biometrisches Referenzmuster, vorzugsweise ein Sprachmuster oder ein Fingerabdruck, in dem Kommunikationsmodul gespeichert wird, und daß das biometrische Muster von dem Anwender über einen Sensor in den Kommunikationsmodul verifiziert wird.

12. Verfahren nach einem der vorhergehenden Ansprüche, **dadurch gekennzeichnet**, **daß** die Daten oder Informationen durch einen Crypto-Controller in dem Kommunikationsmodul verschlüsselt beziehungsweise entschlüsselt werden.

13. Verfahren nach einem der vorhergehenden Ansprüche, **dadudch gekennzeichnet**, **daß** eine Information an einem Anzeigefeld an dem Kommunikationsmodul angezeigt wird.

14. Verfahren nach einem der vorhergehenden Ansprüche, **dadurch gekennzeichnet**, **daß** der Netzanschluß im Kommunikationsmodul durch eine zusätzliche netzseitige Schnittstelle von der Steuerung des Kommunikationsmoduls entkoppelt ist.

15. Verfahren nach einem der vorhergehenden Ansprüche, **dadurch gekennzeichnet**, **daß** in dem Kommunikationsmodul bei der Einleitung eines aus dem Netz angestoßenen Verbindungsaufbaus feststellt, wenn das Gerät, in das der Kommunikationsmodul eingesteckt ist, für die angeforderte Kommunikation nicht geeignet ist.

16. Einrichtung zum Aufbauen einer Kommunikation zwischen einem Anwendergerät und einem Netz, **gekennzeichnet durch** einen persönlichen Kommunikationsmodul, in dem persönliche Daten sowie Informationen über den Kommunikationsaufbau zwischen unterschiedlichen Anwendergeräten und Netzen bereitgestellt sind.

17. Einrichtung nach Anspruch 16, **dadurch gekennzeichnet**, **daß** der persönliche Kommunikationsmodul mit den Identifikations- und Authentisierungsdaten sowie persönlichen Daten seines Besitzers beziehungsweise Anwenders mechanisch gekapselt sind.

18. Einrichtung nach Anspruch 17, **dadurch gekennzeichnet**, **daß** sie über eine Standardschnittstelle mit dem Anwendergerät zu verbinden ist.

19. Einrichtung nach Anspruch 16, **dadurch gekennzeichnet**, **daß** auch die Programme zum Kommunikationsaufbau in dem Kommunikationsmodul bereitgestellt sind.

20. Einrichtung nach Anspruch 16, **dadurch gekennzeichnet**, **daß** der Kommunikationsmodul eine Schnittstelle (4, 24) zum Anwendergerät eine Recheneinheit (6, 26), einen Arbeitsspeicher (8, 28), einen Speicher (10, 30) für ein Betriebssystem (12, 32) für die Programme und die Daten sowie einen Netzschnittstellenmodul (14, 34) aufweist.

21. Einrichtung nach Anspruch 16, **dadurch gekennzeichnet**, **daß** die persönlichen Daten solche zum Identifizieren oder Authentisieren sowie personenbezogene Daten umfassen.

22. Einrichtung nach Anspruch 21, **dadurch gekennzeichnet**, **daß** die Identifizierungs- beziehungsweise Authentisierungs-Daten unter einem Hauptschlüssel und entsprechend einer Schlüsselhierarchie darunter angeordneten, spezifischen Schlüsseln abgelegt sind.

23. Verfahren nach Anspruch 22, **dadurch gekennzeichnet**, **daß** der Hauptschlüssel bereits beim Herstellen des Kommunikationsmoduls eingespeichert wird, wodurch sichergestellt wird, daß der Kommunikationsmodul nicht bereits bei der ersten Inbetriebnahme manipuliert wird.

24. Verfahren nach Anspruch 22, **dadurch gekennzeichnet**, **daß** die spezifischen Schlüssel nach einem cryptographischen Verfahren abgelegt werden, um die Sicherheit der Schlüssel zu erhöhen.

25. Einrichtung nach einem der Ansprüche 16 bis 24, **dadurch gekennzeichnet**, **daß** die persönlichen Daten in dem Kommunikationsmodul in einem geschützten Speicherbereich nicht-manipulierbar gespeichert sind.

26. Einrichtung nach einem der Ansprüche 16 bis 25, **dadurch gekennzeichnet**, **daß** der Kommunikationsmodul Programme umfaßt, die bei Aktivierung durch den Anwender oder einen Kommunikationspartner im Netz entsprechend an sich bekannter Protokolle und an sich bekannter Identifizierungs- oder Authentisierungs-Prozeduren sowie die persönlichen Daten und zum Verbindungsaufbau erforderlichen Parameter, gesteuert durch das Anwendergerät, über eine Geräteschrittstelle von dem Kommunikationsmodul in den Nachrichtenstrom einblenden.

27. Einrichtung nach einem der Ansprüche 16 bis 26, **dadurch gekennzeichnet**, **daß** zur Identifizierung oder Authentisierung des Anwenders eine PIN und/oder ein Paßwort in dem Kommunikationsmodul gespeichert ist, und daß die PIN oder das Paßwort vom Anwender über das Anwendergerät einzugeben ist.

28. Einrichtung nach einem der Ansprüche 16 bis 27, **dadurch gekennzeichnet**, **daß** zur Identifizierung oder Authentisierung des Anwenders ein biometrisches Muster, vorzugsweise ein Sprachmuster oder ein Fingerabdruck, in dem Kommunikationsmodul gespeichert ist und daß das biometrische Muster über einen Sensor (38) am Kommunikationsmodul eingegeben ist.

29. Einrichtung nach einem der Ansprüche 16 bis 28, **gekennzeichnet durch** einen Crypto-Controller (40) in dem Kommunikationsmodul.

30. Einrichtung nach einem der Ansprüche 16 bis 29, **gekennzeichnet durch** ein Anzeigenfeld (42) an dem Kommunikationsmodul.

31. Einrichtung nach einem der Ansprüche 16 bis 30, **gekennzeichnet durch** eine zusätzliche, netzseitige Schnittstelle (44), die unterschiedliche Netzanschlüsse umfaßt.

32. Einrichtung nach einem der Ansprüche 16 bis 31, **dadurch gekennzeichnet**, **daß** indem Kommunikationsmodul bei der Einleitung eines aus dem Netz angestoßenen Verbindungsaufbaus feststellt, wenn das Gerät, in das der Kommunikationsmodul eingesteckt ist, für die angeforderte Kommunikation nicht geeignet ist.
